# EUROPEAN PATENT SPECIFICATION

(11) **EP 2 933 719 B1**
(45) Date of publication and mention of the grant of the patent: **03.06.2020**
(21) Application number: 14165296.6
(22) Date of filing: 18.04.2014
(51) Int. Cl.: G06F 7/58

(54) **Digital methods and devices for generating true random numbers**
Digitale Verfahren und Vorrichtungen zur Erzeugung echter Zufallszahlen
Procédés numériques et dispositifs pour générer de vrais nombres aléatoires

(43) Date of publication of application: 21.10.2015
(73) Proprietor: Rambus Inc., Sunnyvale, CA 94089 (US)
(72) Inventor: Van Loon, Marcel, 5345 BA Oss (NL); Verschueren, Ad, 5038 KG Tilburg (NL)
(74) Representative: de Roquemaurel, Bruno

(56) References cited:
- US-A1- 2006 173 943
- US-A1- 2007 273 408
- US-A1- 2009 089 347
- BUCCI M ET AL: "A Testable Random Bit Generator based on a High Resolution Phase Noise Detection", IEEE DESIGN AND DIAGNOSTICS OF ELECTRONIC CIRCUITS AND SYSTEMS, 2007; DDECS '07, 11 April 2007 (2007-04-11), pages 1-5, XP031215868, IEEE, PISCATAWAY, USA ISBN: 978-1-4244-1161-0
- ABDELKARIM CHERKAOUI ET AL: "A Self-Timed Ring Based True Random Number Generator", ASYNCHRONOUS CIRCUITS AND SYSTEMS (ASYNC), 2013 IEEE 19TH INTERNATIONAL SYMPOSIUM ON, IEEE, 19 May 2013 (2013-05-19), pages 99-106, XP032431277, DOI: 10.1109/ASYNC.2013.15 ISBN: 978-1-4673-5956-6

## Description

### TECHNICAL FIELD

The present invention relates to a method and device for generating random numbers.

### BACKGROUND

Random numbers generation is implemented in various devices, such as cryptographic systems, smartcards authentication devices, electronic gaming devices, audio/video scrambling devices.

Random number generation is critical to cryptographic systems. Symmetric cryptography such as Data Encryption Standard (DES) requires randomly selected encryption keys. Asymmetrical cryptography such as RSA, Diffie-Hellman and DSA requires randomly generated key pairs. Furthermore, some cryptographic protocols such as SSL (Secure Socket Layer) use random challenges in authentication processes.

Because of the widespread use of random numbers in cryptography, a random number generator must be robust enough so that even if the design of the random number generator is known, a random number generated by the random number generator cannot be predicted. A class of random number generators, called "pseudo-random number generators", use a deterministic process, i.e. having a predictable output, to generate a number from a seed. Such a random number generator can be easily compromised, particularly if the seed of the pseudo random number generator can be determined.

In contrast, true number random generators use a non-deterministic source, such as a noise source, e.g. a thermal or flicker noise source. However, the random number generators using such a non-deterministic source comprise analog circuitry that makes random number generators complex to design and to integrate into the high-density integrated circuits of today. Other true random number generators use a low-frequency clocked circuit to sample the output of a Linear Feedback Shift Register (LFSR), the LFSR being driven by a higher frequency Free-Running ring Oscillator (FRO) with a random variation in the frequency to generate random numbers. Due to the sampling by a low frequency of a higher frequency oscillator, a predictable pattern may induce a failure of the oscillator, which is difficult to detect and prevent.

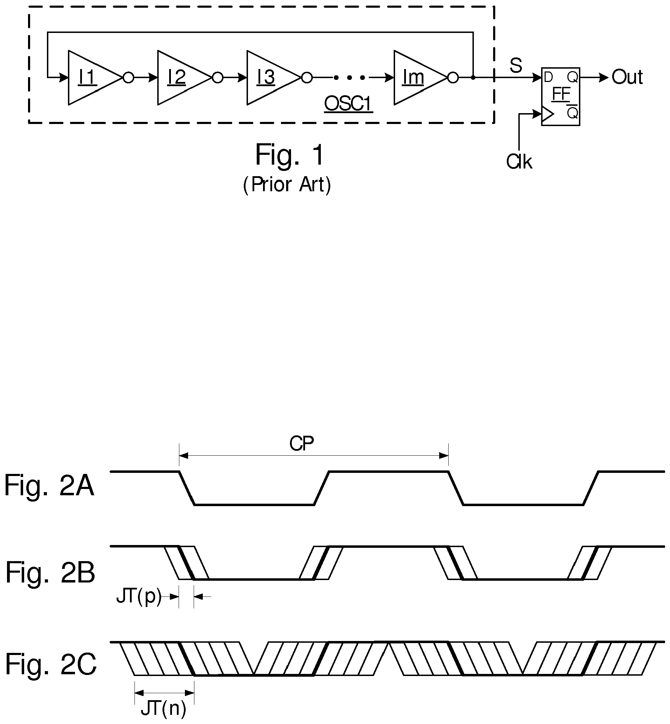

Another true random number generator is shown in Figure 1. The random number generator comprises a free-running ring oscillator OSC1 and a D-type flip-flop FF sampling an output signal S of the oscillator OSC1 at a rate defined by the frequency of a clock signal Clk. The oscillator OSC1 comprises an odd number of inverters 11, 12, 13, Im. The sampling flip-flop FF produces single-bit samples Out that are expected to be not predictable by an external observer. Typically, the period of the clock signal Clk is several orders of magnitude longer than the average oscillation period of the oscillator OSC1. In an alternative implementation, the sampling clock is faster but only one every N samples is used whereas the other samples are discarded.

Internal noise sources in the elements forming the oscillator OSC1 influence switching times of the inverters I1-Im, and thus the output frequency of the oscillator OSC1 builds up a certain amount of jitter or phase noise over time, compared to a noiseless oscillator. Figures 2A, 2B, 2C represent waveforms of the signal S provided by the oscillator OSC1. Figure 2A represents a waveform produced by a noiseless oscillator or at the start of the oscillator OSC1. In figure 2B, after p periods CP of the signal S, a small amount of jitter JT(p) appears in the signal S. Due to the cyclic structure of the oscillator OSC1, the jitter builds up within the oscillator. The probability function for the location (phase error) of an edge of the signal S after a given amount of time has a normal distribution centered around the 'ideal' edge, with a certain standard deviation that grows with time. The amount of jitter built up after a certain time from the start of the oscillator can be expressed as a probability density function that increases over time. In other words, the standard deviation of the probability density function modeling the probability of finding a given state oscillator change at a certain offset from the ideal output waveform increases with time. In figure 2C, after n periods CP, the jitter JT(n) accumulated in the signal S reaches half the period CP. At this time, the standard deviation of the phase error probability reaches at least half the oscillator period CP. In this latter case, the value of signal S can be 0 or 1 at any time. Thus signal S has a value of 0 or 1 with a probability of 1/2. The time n·CP corresponds to the time needed for the accumulated jitter to cover the propagation time of the signal in the whole ring, i.e. the oscillator period.

Most of the noise sources acting on the inverters of the oscillator OSC1 to generate jitter are attributed to external causes, such as temperature variations, supply voltage variations, signal crosstalk, etc. Because most of the noise sources are due to external influences on the circuit, their contribution at a given time during operation of the oscillator OSC1 can not be estimated. Thus it is difficult or even impossible to estimate an amount of the jitter that can be accumulated in the circuit, which is necessary to determine the minimum sample period. However it is possible to estimate a lower bound for the amount of jitter that will occur. It has been determined that the standard deviation of the accumulated jitter grows proportionally with the square root of time (see "Phase Noise and Jitter in CMOS Ring Oscillators", Asad A. Abidi, IEEE Journal of Solid-State Circuits, Vol. 41, No. 8, August 2006).

If the sampling period is long enough, the jitter built-up between samples generates entropy in the sampled value (0 or 1) which can reach a maximum value of 1 bit (probability of 1/2 for either value 0 or 1). This uncertainty towards the sampled value determines the amount of entropy in the sample. In a ring oscillator such as the oscillator OSC1, the maximum entropy value of 1/2 can be reached when the sampling period is greater than n periods CP of the oscillator OSC1 (figure 2C). It results that the entropy bit rate produced by the random number generator of Figure 1 is low with respect to the frequency of the oscillator OSC1. Obviously, this bit rate can be increased by increasing the oscillation frequency of the oscillator OSC1. This is possible in a ring oscillator only by reducing the number of inverters. However a minimum number of inverters is required to ensure oscillation stability and protect the circuit against heating and electromigration effects.

The entropy bit rate can also be increased by using several ring oscillators is parallel. However this solution increases the power consumption and the size of the random number generation circuit.

The patent application US 2006/173943 discloses a ring oscillator comprising signal transmitting cells and a NAND gate having an input receiving an inverted clock signal. The signal propagating in the oscillator is sampled between the cells at the rate of the clock signal. The signal samples thus obtained are used to generate a random number by a parallel-to-serial converter or a decoder configured to detect the switching point of the signal in the oscillator.

It is therefore desirable to produce random samples with an increased sampling rate while maintaining or improving the entropy of each sample. It is also desirable to design a random number generator circuit having a low power consumption and a reduced size.

### SUMMARY

The invention comprises two methods for generating a random number.

The first method comprises the steps of: providing a free-running oscillator comprising n signal transmitting cells connected in series and arranged to form a ring, the transmitting cells comprising an odd number of inverters to make a signal propagating in the ring oscillate, with an oscillation period equal to n·d, where d is the propagation time of a signal state change across a single one of the cells in the ring, the signal propagating in the ring having a jitter standard deviation growing with time; and periodically performing sampling steps, each sampling step comprising simultaneously taking signal samples of signals transiting respectively between each pair of adjacent cells in the ring, the sampling steps being performed with a signal sampling period set to a value within an interval between once and twice the time for the jitter standard deviation of the signal propagating in the ring to be greater than the propagation time d; and combining the signal samples to provide a random bit.

The second method comprises the steps of providing a free-running oscillator comprising signal transmitting cells connected in series and arranged to form a ring, the transmitting cells comprising an odd number of inverters to make a signal propagating in the ring oscillate, the signal propagating in the ring having a jitter standard deviation growing with time; and periodically performing sampling steps, each sampling step comprising simultaneously taking signal samples of signals transiting respectively between each pair of adjacent cells in the ring, the sampling steps being performed with a signal sampling period set to a value within an interval between once and twice the time for the jitter standard deviation of the signal propagating in the ring to be greater than the propagation time of a signal state change across all the cells in the ring; and combining the signal samples to provide a random number determined as a function of an encoded value of the number of the currently switching cell in the ring.

According to an embodiment, in the first method the signal samples are combined to determine a currently switching cell in the ring at a sampling time, the random bit being determined as a function of the signal sample taken from an input or an output of the currently switching cell.

According to an embodiment, in the first method the signal samples are combined to determine a parity bit of a binary word formed by the signal samples, the random bit being determined as a function of the parity bit.

According to an embodiment, the signal samples are taken at each sampling period of a sampling clock signal and combined to provide a random number at every sampling period.

The invention furthermore comprises two circuits for generating a random number. The first circuit comprises a free-running oscillator comprising n signal transmitting cells connected in series and arranged to form a ring, the transmitting cells comprising an odd number of inverters to make a signal propagating in the ring oscillate, with an oscillation period equal to n·d, where d is the propagation time of a signal state change across a single one of the cells in the ring, the signal propagating in the ring having a jitter standard deviation growing with time; a sampling circuit configured to take simultaneously signal samples of signals transiting between each pair of adjacent cells in the ring, the sampling circuit being configured to periodically take samples at a signal sampling period, the sampling period being set to a value within an interval between once and twice the time for the jitter standard deviation of the signal propagating in the ring to be greater than the propagation time d; and a combinatorial circuit configured to combine the signal samples to produce a random bit. The second circuit comprises a free-running oscillator comprising signal transmitting cells connected in series and arranged to form a ring, the transmitting cells comprising an odd number of inverters to make a signal propagating in the ring oscillate, the signal propagating in the ring having a jitter standard deviation growing with time; a sampling circuit configured to take simultaneously signal samples of signals transiting between each pair of adjacent cells in the ring, at a time when the jitter standard deviation of the signal propagating in the ring is greater than a signal propagation time of a signal state change across one of the cells in the ring, the sampling circuit being configured to periodically take samples at a signal sampling period the sampling period being set to a value within an interval between once and twice the time for the jitter standard deviation of the signal propagating in the ring to be greater than the propagation time of a signal state change across all the cells in the ring; and a combinatorial circuit configured to combine the signal samples to produce a random number determined as a function of an encoded value of the number of the currently switching cell in the ring.

According to an embodiment, the sampling circuit is configured to be clocked by a sampling clock signal to provide signal samples at each sampling period of the sampling clock signal.

According to an embodiment, in the first circuit the combinatorial circuit is configured to combine the signal samples to determine a signal value output by a currently switching cell in the ring, and to determine the random number as a function of the signal value.

According to an embodiment, each of the cells comprises a delay line and/or an inverter, or the cell ring forms a Fibonacci or Galois oscillator.

According to an embodiment, the sampling circuit comprises sampling units each having an input connected to an input or an output of one of the cells, and an output adapted to provide a signal sample at the sampling rate defined by a sampling clock signal.

According to an embodiment, the sampling circuit comprises one sampling unit for each cell, the sampling unit having an input connected to an input or an output of the cell.

According to an embodiment, in the first circuit the combinatorial circuit comprises XOR gates combining all the signal samples into the single bit.

### BRIEF DESCRIPTION OF THE DRAWINGS

The method and/or device may be better understood with reference to the following drawings and description. Non-limiting and non-exhaustive descriptions are described with the following drawings. In the figures, like referenced signs may refer to like parts throughout the different figures unless otherwise specified.
Figure 1 previously described is a block diagram of a conventional true random number generator circuit comprising a ring oscillator;
Figure 2 previously described shows waveforms of an output signal of the ring oscillator of Figure 1;
Figure 3 is a block diagram of a true random number generator circuit, according to an embodiment;
Figure 4 is a block diagram of a combinatorial logic circuit of the circuit shown in Figure 3, according to an embodiment;
Figure 5 is a block diagram of a combinatorial logic circuit of the circuit shown in Figure 3, according to another embodiment;
Figure 6 is a block diagram of a combinatorial logic circuit of the circuit shown in Figure 3, according to another embodiment;
Figure 7 is a block diagram of a cell circuit of the ring oscillator, according to another embodiment;
Figure 8 is a block diagram of a cell circuit of the ring oscillator, according to another embodiment.

### DETAILED DESCRIPTION

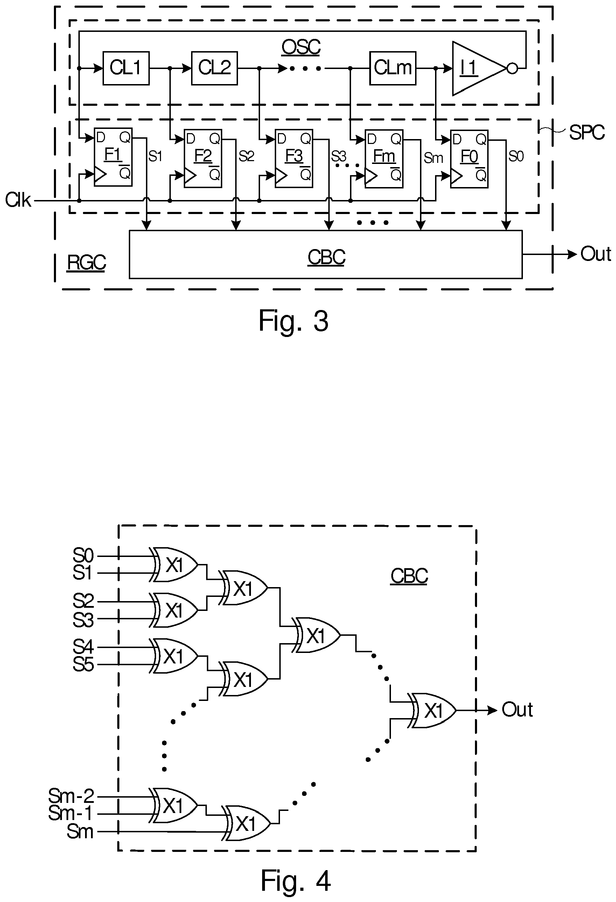

Figure 3 provides a block diagram of a random number generator circuit RGC, according to an embodiment. The circuit RGC comprises a free-running oscillator OSC, a sampling circuit SPC, and a combinatorial circuit CBC. The oscillator OSC is a ring oscillator such as the oscillator OSC of Figure 1. The sampling circuit SPC is configured to sample signals within the oscillator OSC at a sampling rate defined by a sampling clock signal Clk. The combinatorial circuit CBC is configured to receive signal samples provided by the sampling circuit SPC and to combine them to provide random binary numbers.

In the example of Figure 3, the oscillator OSC comprises m cells CL1, CL2, ... CLm, 11 connected in series so as to form a ring, where an output of a last one 11 of the cells is connected to an input of a first one CL1 of the cells. The cells CL1-CLm, 11 includes an odd number of inverters (m being an integer number), to make the signal propagating in the ring oscillate. The sampling circuit SPC comprises one sampling unit F0, F1, F2, F3 ... Fm, for each link connecting two adjacent cells CL1-CLm, 11 in the oscillator OSC. Each sampling unit F0-Fm comprises an input connected to the input (or output) of a respective one of the cells CL1-CLm. Each sampling unit F0-Fm provides a sample signal S0, S1, S2, S3, ... Sm to the combinatorial circuit CBC at each sampling period of the sampling clock signal Clk. Each of the sampling units F0-Fm comprises for example a D-type flip-flop receiving the signal to be sampled by an input D, and the clock signal Clk by a clock input, and providing the sampled signal by a direct output Q.

It results that the sampling period may be chosen to be greater than or equal to the time needed for the accumulated jitter to cover the propagation time in the ring, of a signal state change between two consecutive inputs of sampling units F0-Fm in the cell ring. If the signal is sampled in the ring between each cell CL1-CLm, 11, the sampling period has to be chosen greater than the time needed for the accumulated jitter to cover the propagation time of the signal in only one cell. In contrast, in the random number generator shown in Figure 1, the sampling period has to be greater than the time needed for the accumulated jitter to cover the propagation time of the signal in the whole ring, i.e. the ring oscillator period. Thus if d is the propagation time of the signal in a single cell, and n the number of cells, the oscillation period of the ring oscillator is equal to n·d. Because the jitter grows as a function of the square root of time, the sampling period of the circuit RGC (figure 3) may be reduced by a factor n² with respect to the sampling period of the circuit of Figure 1.

In an example not covered by the invention as claimed, the sampling circuit SPC may comprise less than one sampling unit F0-Fm per link between adjacent cells CL1-CLm, 11, e.g. one sampling unit for two or three of these links, but at least two sampling units.

The clock signal Clk may have an accurate frequency or not. The clock signal Clk may be provided by another ring oscillator accumulating jitter, such as a free-running oscillator, to introduce another degree of randomness in the circuit. In this manner, the sampling period may be reduced without affecting the entropy of the random numbers provided. Each sampling unit F0-Fm may comprise another D-type flip-flop receiving the sample signals SO-Sm and clocked by a clock signal of the combinatorial circuit CBC. Thus the circuit CBC receives the sample signals and provides a signal Out at a same frequency.

In accordance with the first embodiment of the invention, the sampling period is chosen to be greater than the time for the jitter to cover the propagation time of a signal state change across a single one of the cells CL1-CLm, 11. In accordance with the first embodiment, the sampling period is furthermore set to a value within the interval between once and twice the time for the jitter to cover the propagation time of a signal state change across a single one of the cells CL1-CLm, 11, i.e. the time for the jitter to cover the time between the detection of a state change of the signal in input of one of the cells CL1-CLm, 11, and the detection of a state change in the signal output by the cell. The entropy of the signal Out is based on the unpredictability of the state of the cell which is currently switching, after a given time, or the unpredictability of which one of two adjacent cells is currently switching.

Figure 4 is a block diagram of an example of the combinatorial logic circuit CBC. The combinatorial circuit CBC comprises XOR gates X1 combining the signal samples from the sampling units F0-Fm, and one output providing a binary signal Out. If the number of sample signals SO-Sm to high level (1) is odd, then the signal Out is set to high level (1). Conversely, if the number of sample signals SO-Sm to high level (0) is even, then the signal Out is set to low level (0). In other words, the circuit CBC sets the signal Out to the parity value of the binary word formed by the sample signals SO-Sm.

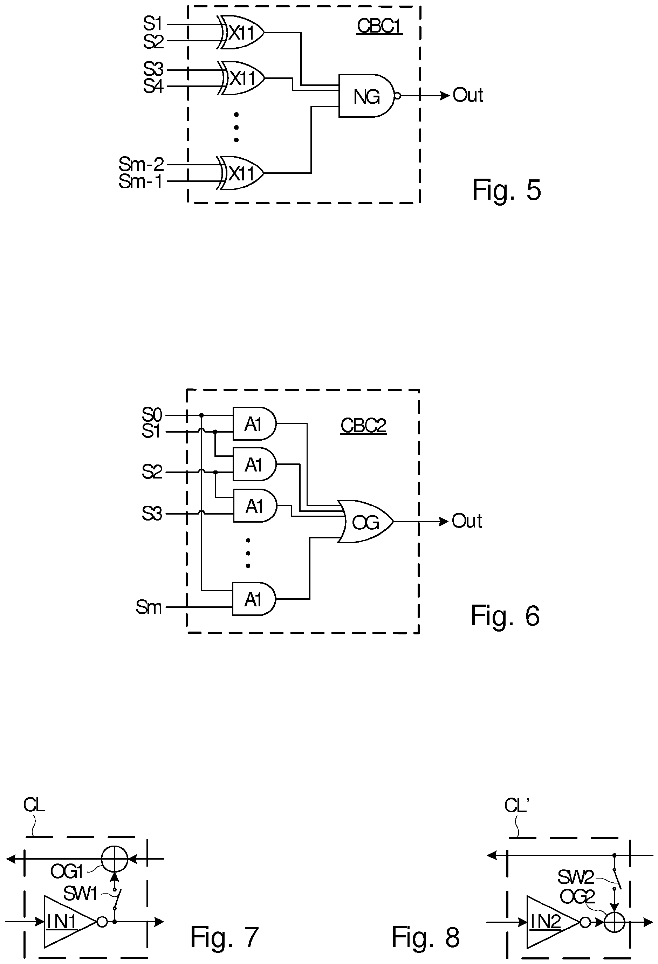

Figure 5 represents another implementation of the combinatorial circuit that can be used when each of the cells CL1-Clm is an inverter. The combinatorial circuit CBC1 of Figure 5 comprises an XOR gate X11 combining the input and output signals of each cell (numbered from 0) having an odd rank in the ring, and a NAND gate NG combining the outputs of the XOR gates X11. The gate NG provides the signal Out at a state depending on the rank, odd or even, of the switching cell at the sampling time of the received signal samples.

In another embodiment, the combinatorial circuit CBC is configured to detect which one of the cells CL1-CLm, 11 is currently about to switch at the sampling time of the signal samples provided to the circuit CBC. The circuit CBC may be configured to output the input (or output) value of the detected currently switching cell. Figure 6 represents another implementation of the combinatorial circuit that can be used when each of the cells CL1-Clm is an inverter. The combinatorial circuit CBC2 of Figure 6 comprises an AND gate A1 combining the input and output signals of each cell in the ring, and an OR gate OG combining the outputs of the gates A1. The gate OG provides the signal Out at a state of the output signal of the switching cell at the sampling time of the received signal samples.

According to another embodiment, the combinatorial circuit CBC is configured to compare the sample signals SO-Sm provided at each clock signal Clk occurrence by the sampling circuit SPC, and to detect on the basis of this comparison, which of the cells CL1-CLm, 11 is currently switching. The output value Out of the combinatorial circuit CBC is then an encoded value of the number of the detected currently switching cell. In accordance with the second embodiment of the invention, the sampling period is chosen to be greater than the time for the jitter to cover the propagation time of a signal state change across all the cells CL1-CLm, 11. Thus the sampling period is chosen greater than the time for the jitter to cover half the oscillator period. In accordance with the second embodiment, the sampling period is furthermore set to a value within the interval between once and twice the time for the jitter to cover half the oscillator period. The entropy of the signal Out is based on the unpredictability of the actual transition location in the ring oscillator OSC after given time. The encoded value of the number of the currently switching cell may comprise a number of bits depending on the number m+1 of cells CL1-CLm or sampling units F0-Fm.

According to an embodiment, each of the cells CL1-CLm is a delay line, and the cell 11 is an inverter. Each delay line CL1-CLm may comprise an even number of inverters. A delay line which is currently switching can be detected by comparing the input signal with the output signal of the delay line, as sampled by the sampling circuit SPC. The delay line having an input signal different from its output signal is currently switching. With regard to the inverter I1, it is currently switching if its input signal is the same as its output signal, as sampled by the sampling circuit SPC.

According to another embodiment, each of the cells CL1-CLm is an inverter, the number of inverters connected within the ring of the oscillator OSC being odd.

According to another embodiment, the oscillator OSC is a chaotic oscillator such as a Fibonacci ring oscillator or a Galois ring oscillator. Figure 7 represents one cell CL of the cells CL1-CLm of a Fibonacci oscillator. Each cell CL comprises an inverter IN1, a switch SW1 and an OR gate OG1. The oscillator comprises an odd number of inverters 11, IN1. An input of the inverter IN1 is connected to an input of the cell CL. An output of the inverter IN1 is connected to an output of the cell CL and is linked to an input of the gate OG1 by means of the switch SW1. The gate OG1 is interposed in the return link from the inverter 11 to the first cell CL1 of the ring oscillator, i.e. an input of the gate OG1 is connected to an output of the gate OG1 of an adjacent cell CL1-CLm or to an output of the inverter I1, and an output of the gate OG1 is connected to an input of the gate OG1 of an adjacent cell CL1-CLm or to the input of the inverter IN1 of the first cell CL1.

According to another embodiment, the oscillator OSC is a Galois ring oscillator. Figure 8 represents one cell CL' of the cells CL1-CLm of such an oscillator. Each cell CL1-CLm comprises an inverter IN2, a switch SW2 and an OR gate OG2. The oscillator comprises an odd number of inverters I1, IN2. An input of the inverter IN2 is connected to an input of the cell CL'. An output of the inverter IN2 is connected to an input of the gate OG2. An output of the gate OG2 is connected to an output of the cell CL'. The return link connecting the output of the last cell (inverter I1) to the input of the first cell CL1 of the ring oscillator is linked to an input of the gate OG2 by means of the switch SW2.

The methods disclosed herein may be implemented involving software programs executable by a computer system. Further, implementations may include distributed processing and parallel processing.

The illustrations described herein are intended to provide a general understanding of the structure of various embodiments. These illustrations are not intended to serve as a complete description of all of the elements and features of apparatus, processors and systems that utilizes the structures or methods described therein. Many other embodiments may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

For example, in implementations not covered by the invention as claimed, the disclosed random number generator circuit may be used to generate only one number before it is turned off. Thus it is not necessary to provide a clock signal to the sampling units F0-Fm. Many other signal sampling circuits are known such as JK- or T-type flip-flops or latches. Thus one of these circuits may be chosen for the sampling units instead of a D-type flip-flop.

Further, the disclosure and the illustrations are to be considered as illustrative rather than restrictive.

## Claims

1. A method for generating a random number, comprising steps of:
providing a free-running oscillator (OSC) comprising n signal transmitting cells (CL1-CLm, 11) connected in series and arranged to form a ring, the transmitting cells comprising an odd number of inverters (11) to make a signal propagating in the ring oscillate, with an oscillation period equal to n·d, where d is the propagation time of a signal state change across a single one of the cells in the ring, the signal propagating in the ring having a jitter standard deviation growing with time; and
periodically performing sampling steps, each sampling step comprising simultaneously taking signal samples (S0-Sm) of signals transiting respectively between each pair of adjacent cells in the ring, the sampling steps being performed with a signal sampling period set to a value within an interval between once and twice the time for the jitter standard deviation of the signal propagating in the ring to be greater than the propagation time d; and combining the signal samples to provide a random bit (Out).

2. The method of claim 1, wherein the signal samples (SO-Sm) are combined to determine a currently switching cell (CL1-CLm, 11) in the ring at a sampling time, the random bit being determined as a function of the signal sample taken from an input or an output of the currently switching cell.

3. The method of claim 1 or 2, wherein the signal samples (SO-Sm) are combined to determine a parity bit of a binary word formed by the signal samples, the random bit being determined as a function of the parity bit.

4. A method for generating a random number, comprising steps of:
providing a free-running oscillator (OSC) comprising signal transmitting cells (CL1-CLm, 11) connected in series and arranged to form a ring, the transmitting cells comprising an odd number of inverters (11) to make a signal propagating in the ring oscillate, the signal propagating in the ring having a jitter standard deviation growing with time; and
periodically performing sampling steps, each sampling step comprising simultaneously taking signal samples (S0-Sm) of signals transiting respectively between each pair of adjacent cells in the ring, the sampling steps being performed with a signal sampling period set to a value within an interval between once and twice the time for the jitter standard deviation of the signal propagating in the ring to be greater than the propagation time of a signal state change across all the cells in the ring; and
combining the signal samples to provide a random number (Out) determined as a function of an encoded value of the number of the currently switching cell in the ring.

5. The method of one of claims 1 to 4, wherein the signal samples (SO-Sm) are taken at each sampling period of a sampling clock signal (Clk) and combined to provide a random number (Out) at every sampling period.

6. A circuit for generating a random number, comprising:
a free-running oscillator (OSC) comprising n signal transmitting cells (CL1-CLm, 11) connected in series and arranged to form a ring, the transmitting cells comprising an odd number of inverters (11) to make a signal propagating in the ring oscillate, with an oscillation period equal to n·d, where d is the propagation time of a signal state change across a single one of the cells in the ring, the signal propagating in the ring having a jitter standard deviation growing with time;
a sampling circuit (SPC) configured to take simultaneously signal samples (SO-Sm) of signals transiting between each pair of adjacent cells in the ring, the sampling circuit being configured to periodically take samples at a signal sampling period, the sampling period being set to a value within an interval between once and twice the time for the jitter standard deviation of the signal propagating in the ring to be greater than the propagation time d; and
a combinatorial circuit (CBC) configured to combine the signal samples to produce a random bit (Out).

7. The circuit of claim 6, wherein the combinatorial circuit (CBC) is configured to combine the signal samples (S0-Sm) to determine a signal value output by a currently switching cell (CL1-CLm, I1) in the ring, and to determine the random number (Out) as a function of the signal value.

8. The circuit of one of claims 6 and 7, wherein the combinatorial circuit (CBC) comprises XOR gates (X1-Xm) configured to combine all the signal samples (S0-Sm) into the single bit (Out).

9. A circuit for generating a random number, comprising:
a free-running oscillator (OSC) comprising signal transmitting cells (CL1-CLm, 11) connected in series and arranged to form a ring, the transmitting cells comprising an odd number of inverters (11) to make a signal propagating in the ring oscillate, the signal propagating in the ring having a jitter standard deviation growing with time;
a sampling circuit (SPC) configured to take simultaneously signal samples (SO-Sm) of signals transiting between each pair of adjacent cells in the ring, at a time when the jitter standard deviation of the signal propagating in the ring is greater than a signal propagation time of a signal state change across one of the cells in the ring, the sampling circuit being configured to periodically take samples at a signal sampling period the sampling period being set to a value within an interval between once and twice the time for the jitter standard deviation of the signal propagating in the ring to be greater than the propagation time of a signal state change across all the cells in the ring; and
a combinatorial circuit (CBC) configured to combine the signal samples to produce a random number (Out) determined as a function of an encoded value of the number of the currently switching cell in the ring.

10. The circuit of one of claims 6 to 9, wherein the sampling circuit (SPC) is configured to be clocked by a sampling clock signal (Clk) to provide signal samples (S0-Sm) at each sampling period of the sampling clock signal.

11. The circuit of one of claims 6 to 10, wherein each of the cells (CL1-CLm, I1) comprises a delay line and/or an inverter (IN1, IN2, I1), or the cell ring forms a Fibonacci or Galois oscillator.

12. The circuit of one of claims 6 to 11, wherein the sampling circuit (SPC) comprises one sampling unit (F0-Fm) for each cell, the sampling unit having an input (D) connected to an input or an output of the cell.

13. The circuit of claim 12, wherein each sampling unit (F0-Fm) comprises an output (Q) configured to provide a signal sample (S0-Sm) at the sampling rate defined by a sampling clock signal (Clk).

## Patentansprüche

1. Verfahren zum Erzeugen einer Zufallszahl, umfassend Schritte zum:
Bereitstellen eines freilaufenden Oszillators (OSC), der n Signalsendezellen (CL1-CLm, I1) umfasst, die in Reihe geschaltet und angeordnet sind, um einen Ring zu bilden, wobei die Sendezellen eine ungerade Zahl von Wechselrichtern (I1) umfassen, um ein Signal, das sich im Ring verbreitet, mit einer Schwingungsdauer gleich n-d zum Schwingen zu bringen, wobei d die Laufzeit einer Signalzustandsänderung über eine einzelne der Zellen im Ring ist, wobei das Signal, das sich im Ring verbreitet, eine mit der Zeit zunehmende Jitter-Standardabweichung aufweist; und
periodisches Durchführen von Abtastschritten, wobei jeder Abtastschritt das gleichzeitige Aufnehmen von Signalabtastungen (S0-Sm) von Signalen umfasst, die jeweils zwischen jedem Paar angrenzender Zellen im Ring übertragen werden, wobei die Abtastschritte mit einer Signalabtastperiode durchgeführt werden, die auf einen Wert innerhalb eines Intervalls zwischen dem Einfachen und Zweifachen für die Jitter-Standardabweichung des Signals, das sich im Ring verbreitet, eingestellt wird, die größer ist als die Laufzeit d; und
Kombinieren der Signalabtastwerte, um ein Zufallsbit (Out) bereitzustellen.

2. Verfahren nach Anspruch 1, wobei die Signalabtastwerte (S0-Sm) kombiniert werden, um eine aktuell schaltende Zelle (CL1-CLm, I1) im Ring zu einem Abtastzeitpunkt zu bestimmen, wobei das Zufallsbit als eine Funktion des von einer Eingabe oder einer Ausgabe der aktuell schaltenden Zelle genommenen Signalabtastwerts bestimmt wird.

3. Verfahren nach Anspruch 1 oder 2, wobei die Signalabtastwerte (S0-Sm) kombiniert werden, um ein Paritätsbit eines binären Worts, gebildet durch die Signalabtastwerte, zu bestimmen, wobei das Zufallsbit als eine Funktion des Paritätsbits bestimmt wird.

4. Verfahren zum Erzeugen einer Zufallszahl, umfassend Schritte zum:
Bereitstellen eines freilaufenden Oszillators (OSC), der Signalsendezellen (CL1-CLm, I1) umfasst, die in Reihe geschaltet und angeordnet sind, um einen Ring zu bilden, wobei die Sendezellen eine ungerade Zahl von Wechselrichtern (I1) umfassen, um ein Signal, das sich im Ring verbreitet, zum Schwingen zu bringen, wobei das Signal, das sich im Ring verbreitet, eine mit der Zeit zunehmende Jitter-Standardabweichung aufweist; und
periodisches Durchführen von Abtastschritten, wobei jeder Abtastschritt das gleichzeitige Aufnehmen von Signalabtastungen (S0-Sm) von Signalen umfasst, die jeweils zwischen jedem Paar angrenzender Zellen im Ring übertragen werden, wobei die Abtastschritte mit einer Signalabtastperiode durchgeführt werden, die auf einen Wert innerhalb eines Intervalls zwischen dem Einfachen und Zweifachen für die Jitter-Standardabweichung des Signals, das sich im Ring verbreitet, eingestellt wird, die größer ist als die Laufzeit einer Signalzustandsänderung über alle Zellen im Ring; und
Kombinieren der Signalabtastwerte, um eine Zufallszahl (Out) bereitzustellen, die als eine Funktion eines codierten Werts der Zahl der aktuell schaltenden Zelle im Ring bestimmt wird.

5. Verfahren nach einem der Ansprüche 1 bis 4, wobei die Signalabtastwerte (S0-Sm) bei jeder Abtastperiode eines Abtasttaktsignals (CLK) aufgenommen und kombiniert werden, um eine Zufallszahl (Out) bei jeder Abtastperiode bereitzustellen.

6. Schaltung zum Erzeugen einer Zufallszahl, umfassend:
einen freilaufenden Oszillator (OSC), der n Signalsendezellen (CL1-CLm, I1) umfasst, die in Reihe geschaltet und angeordnet sind, um einen Ring zu bilden, wobei die Sendezellen eine ungerade Zahl von Wechselrichtern (I1) umfassen, um ein Signal, das sich im Ring verbreitet, mit einer Schwingungsdauer gleich n-d zum Schwingen zu bringen, wobei d die Laufzeit einer Signalzustandsänderung über eine einzelne der Zellen im Ring ist, wobei das Signal, das sich im Ring verbreitet, eine mit der Zeit zunehmende Jitter-Standardabweichung aufweist;
Abtastschaltung (SPC), die konfiguriert ist, um gleichzeitig Signalabtastwerte (S0-Sm) von Signalen aufzunehmen, die zwischen jedem Paar angrenzender Zellen im Ring übertragen werden, wobei die Abtastschaltung konfiguriert ist, um periodisch Abtastwerte zu einer Signalabtastperiode aufzunehmen, wobei die Abtastperiode auf einen Wert innerhalb eines Intervalls zwischen dem Einfachen und Zweifachen für die Jitter-Standardabweichung des Signals, das sich im Ring verbreitet, eingestellt wird, die größer ist als die Laufzeit d; und
eine kombinatorische Schaltung (CBC), die konfiguriert ist, um die Signalabtastwerte zu kombinieren, um ein Zufallsbit (Out) zu erzeugen.

7. Schaltung nach Anspruch 6, wobei die kombinatorische Schaltung (CBC) konfiguriert ist, um die Signalabtastwerte (S0-Sm) zu kombinieren, um eine Signalwertausgabe einer aktuell schaltenden Zelle (CL1-CLm, I1) im Ring zu bestimmen und die Zufallszahl (Out) als eine Funktion des Signalwerts zu bestimmen.

8. Schaltung nach einem der Ansprüche 6 und 7, wobei die kombinatorische Schaltung (CBC) XOR-Gates (X1-Xm) umfasst, die konfiguriert sind, um alle Signalabtastwerte (S0-Sm) im einzelnen Bit (Out) zu kombinieren.

9. Schaltung zum Erzeugen einer Zufallszahl, umfassend:
einen freilaufenden Oszillator (OSC), der Signalsendezellen (CL1 -CLm, 11) umfasst, die in Reihe geschaltet und angeordnet sind, um einen Ring zu bilden, wobei die Sendezellen eine ungerade Zahl von Wechselrichtern (11) umfassen, um ein Signal, das sich im Ring verbreitet, zum Schwingen zu bringen, wobei das Signal, das sich im Ring verbreitet, eine mit der Zeit zunehmende Jitter-Standardabweichung aufweist;
Abtastschaltung (SPC), die konfiguriert ist, um gleichzeitig Signalabtastwerte (S0-Sm) von Signalen aufzunehmen, die zwischen jedem Paar angrenzender Zellen im Ring übertragen werden, zu einem Zeitpunkt, zu dem die Jitter-Standardabweichung des Signals, das sich im Ring verbreitet, größer ist als eine Signallaufzeit einer Signalzustandsänderung über eine der Zellen im Ring, wobei die Abtastschaltung konfiguriert ist, um periodisch Abtastwerte zu einer Signalabtastperiode aufzunehmen, wobei die Abtastperiode auf einen Wert innerhalb eines Intervalls zwischen dem Einfachen und Zweifachen für die Jitter-Standardabweichung des Signals, das sich im Ring verbreitet, eingestellt wird, die größer ist als Laufzeit einer Signalzustandsänderung über alle Zellen im Ring; und
eine kombinatorische Schaltung (CBC), die konfiguriert ist, um die Signalabtastwerte zu kombinieren, um eine Zufallszahl (Out) zu erzeugen, die als eine Funktion eines codierten Werts der Zahl der aktuell schaltenden Zelle im Ring bestimmt wird.

10. Schaltung nach einem der Ansprüche 6 bis 9, wobei die Abtastschaltung (SPC) konfiguriert ist, um durch ein Abtasttaktsignal (Clk) getaktet zu werden, um Signalabtastwerte (S0-Sm) zu jeder Abtastperiode des Abtasttaktsignals bereitzustellen.

11. Schaltung nach einem der Ansprüche 6 bis 10, wobei jede der Zellen (CL1-CLm, I1) eine Verzögerungsleitung und/oder einen Wechselrichter (IN1, IN2, I1) umfasst oder der Ring der Zelle 10 einen Fibonacci- oder Galois-Oszillator bildet.

12. Schaltung nach einem der Ansprüche 6 bis 11, wobei die Abtastschaltung (SPC) eine Abtasteinheit (F0-Fm) für jede Zelle umfasst, wobei die Abtasteinheit einen Eingang (D) aufweist, der mit einem Eingang oder einem Ausgang der Zelle verbunden ist.

13. Schaltung nach Anspruch 12, wobei jede Abtasteinheit (F0-Fm) einen Ausgang (Q) umfasst, der konfiguriert ist, um einen Signalabtastwert (S0-Sm) mit der Abtastrate bereitzustellen, die durch ein Abtasttaktsignal (Clk) definiert ist.

## Revendications

1. Procédé de génération d'un nombre aléatoire, comprenant les étapes suivantes :
prévoir un oscillateur libre (OSC) comprenant n cellules de transmission de signal (CL1-CLm, I1) connectées en série et disposées pour former un anneau, les cellules de transmission comprenant un nombre impair d'inverseurs (I1) pour faire osciller un signal se propageant dans l'anneau, avec une période d'oscillation égale à n·d, où d est le temps de propagation d'un changement d'état de signal à travers une seule des cellules de l'anneau, le signal se propageant dans l'anneau ayant une gigue d'écart-type croissant dans le temps ; et
effectuer périodiquement des étapes d'échantillonnage, chaque étape d'échantillonnage comprenant la prise simultanée d'échantillons (S0-Sm) de signaux transitant respectivement entre chaque paire de cellules adjacentes dans l'anneau, les étapes d'échantillonnage étant effectuées avec une période d'échantillonnage de signal fixée à une valeur comprise entre une et deux fois le temps nécessaire pour que l'écart-type de la gigue du signal se propageant dans l'anneau soit supérieur au temps de propagation d ; et
combiner les échantillons de signaux pour fournir un bit aléatoire (Out).

2. Procédé selon la revendication 1, dans lequel les échantillons de signaux (SO-Sm) sont combinés pour déterminer une cellule en cours de commutation (CL1-CLm, I1) dans l'anneau à un moment d'échantillonnage, le bit aléatoire étant déterminé en fonction de l'échantillon de signal prélevé à une entrée ou une sortie de la cellule en cours de commutation.

3. Procédé selon la revendication 1 ou 2, dans lequel les échantillons de signaux (S0-Sm) sont combinés pour déterminer un bit de parité d'un mot binaire formé par les échantillons de signaux, le bit aléatoire étant déterminé en fonction du bit de parité.

4. Procédé pour générer un nombre aléatoire, comprenant les étapes suivantes :
prévoir un oscillateur libre (OSC) comprenant des cellules de transmission de signaux (CL1-CLm, I1) connectées en série et disposées pour former un anneau, les cellules de transmission comprenant un nombre impair d'inverseurs (I1) pour faire osciller un signal se propageant dans l'anneau, le signal se propageant dans l'anneau ayant une gigue d'écart-type qui croît dans le temps ; et
effectuer périodiquement des étapes d'échantillonnage, chaque étape d'échantillonnage comprenant la prise simultanée d'échantillons (S0-Sm) de signaux transitant respectivement entre chaque paire de cellules adjacentes dans l'anneau, les étapes d'échantillonnage étant effectuées avec une période d'échantillonnage fixée à une valeur comprise entre une et deux fois le temps nécessaire pour que l'écart-type de la gigue du signal se propageant dans l'anneau soit supérieur au temps de propagation de l'état du signal à travers toutes les cellules de l'anneau ; et
comlbiner les échantillons de signaux pour fournir un nombre aléatoire (Out) déterminé en fonction d'une valeur codée du numéro de la cellule en cours de commutation dans l'anneau.

5. Procédé selon l'une des revendications 1 à 4, dans lequel les échantillons de signaux (S0-Sm) sont prélevés à chaque période d'échantillonnage d'un signal d'horloge d'échantillonnage (Clk) et combinés pour fournir un nombre aléatoire (Out) à chaque période d'échantillonnage.

6. Circuit de génération d'un nombre aléatoire, comprenant ;
un oscillateur libre (OSC) comprenant n cellules de transmission de signal (CL1-CLm, I1) connectées en série et agencées pour former un anneau, les cellules de transmission comprenant un nombre impair d'inverseurs (I1) pour faire osciller un signal se propageant dans l'anneau, avec une période d'oscillation égale à n•d, où d est le temps de propagation d'un changement d'état de signal à travers une seule des cellules dans l'anneau, le signal se propageant dans l'anneau ayant une gigue d'écart-type croissant dans le temps ;
un circuit d'échantillonnage (SPC) configuré pour prendre simultanément des échantillons (S0-Sm) de signaux transitant entre chaque paire de cellules adjacentes dans l'anneau, le circuit d'échantillonnage étant configuré pour prendre périodiquement des échantillons à une période d'échantillonnage, la période d'échantillonnage étant fixée à une valeur comprise entre une et deux fois le temps nécessaire pour que l'écart-type de la gigue du signal se propageant dans l'anneau soit supérieur au temps de propagation d ; et
un circuit combinatoire (CBC) configuré pour combiner les échantillons de signaux afin de produire un bit aléatoire (Out).

7. Circuit selon la revendication 6, dans lequel le circuit combinatoire (CBC) est configuré pour combiner les échantillons de signaux (S0-Sm) afin de déterminer une valeur de signal délivrée par une cellule en cours de commutation (CL1-CLm, I1) dans l'anneau, et pour déterminer le nombre aléatoire (Out) en fonction de la valeur du signal.

8. Circuit selon l'une des revendications 6 et 7, dans lequel le circuit combinatoire (CBC) comprend des portes XOR (X1-Xm) configurées pour combiner tous les échantillons de signaux (S0-Sm) dans le bit unique (Out).

9. Circuit de génération d'un nombre aléatoire, comprenant ;
un oscillateur libre (OSC) comprenant des cellules de transmission de signaux (CL1-CLm, I1) connectées en série et disposées pour former un anneau, les cellules de transmission comprenant un nombre impair d'inverseurs (I1) pour faire osciller un signal se propageant dans l'anneau, le signal se propageant dans l'anneau ayant une gigue d'écart-type qui croît dans le temps ;
un circuit d'échantillonnage (SPC) configuré pour prendre simultanément des échantillons (S0-Sm) de signaux transitant entre chaque paire de cellules adjacentes de l'anneau, à un moment où l'écart-type de la gigue du signal se propageant dans l'anneau est supérieur au temps de propagation d'un changement d'état du signal à travers l'une des cellules de l'anneau, le circuit d'échantillonnage étant configuré pour prélever périodiquement des échantillons à une période d'échantillonnage, la période d'échantillonnage étant fixée à une valeur comprise entre une et deux fois le temps nécessaire pour que l'écart-type de la gigue du signal se propageant dans l'anneau soit supérieur au temps de propagation d'un changement d'état du signal à travers toutes les cellules de l'anneau ; et
un circuit combinatoire (CBC) configuré pour combiner les échantillons de signaux afin de produire un nombre aléatoire (Out) déterminé en fonction d'une valeur codée du numéro de la cellule en cours de commutation dans l'anneau.

10. Circuit selon l'une des revendications 6 à 9, dans lequel le circuit d'échantillonnage (SPC) est configuré pour être cadencé par un signal d'horloge d'échantillonnage (Clk) pour fournir des échantillons de signaux (SO-Sm) à chaque période d'échantillonnage du signal d'horloge d'échantillonnage.

11. Circuit de l'une des revendications 6 à 10, dans lequel chacune des cellules (CL1-CLm, I1) comprend une ligne à retard et/ou un inverseur (IN1, IN2, 11), ou l'anneau de cellules forme un oscillateur de Fibonacci ou de Galois.

12. Circuit selon l'une des revendications 6 à 11, dans lequel le circuit d'échantillonnage (SPC) comprend une unité d'échantillonnage (F0-Fm) pour chaque cellule, l'unité d'échantillonnage ayant une entrée (D) connectée à une entrée ou une sortie de la cellule.

13. Circuit selon la revendication 12, dans lequel chaque circuit d'échantillonnage (FO-Fm) comprend une sortie (Q) configurée pour fournir un échantillon de signal (S0-Sm) à la fréquence d'échantillonnage définie par un signal d'horloge d'échantillonnage (Clk).
